(19) Europäisches Patentamt
European Patent Office
Office européen des brevets

(11) **EP 1 363 415 B1**

(12) **EUROPEAN PATENT SPECIFICATION**

(45) Date of publication and mention
of the grant of the patent:
**07.07.2010 Bulletin 2010/27**

(51) Int Cl.:
***H04B 10/10*** *(2006.01)*

(21) Application number: **03252964.6**

(22) Date of filing: **13.05.2003**

(54) **Method of evaluating free-space optical propagation characteristics**

Verfahren zur Bewertung der freiraum-optischen Ausbreitungsmerkmale

Méthode d'évaluation des caractéristiques de propagation optique en espace libre

(84) Designated Contracting States:
**AT BE BG CH CY CZ DE DK EE ES FI FR GB GR HU IE IT LI LU MC NL PT RO SE SI SK TR**

(30) Priority: **14.05.2002 JP 2002138615**

(43) Date of publication of application:
**19.11.2003 Bulletin 2003/47**

(73) Proprietor: **National Institute of Information and Communications Technology, Incorporated Administrative Agency
Koganei-shi,
Tokyo (JP)**

(72) Inventors:
- **Nakamura, Moriya,
Independent Administrative Inst.
Koganei-shi,
Tokyo (JP)**
- **Akiba, Makoto,
Independent Administrative Inst.
Koganei-shi,
Tokyo (JP)**
- **Kuri, Toshiaki,
Independent Administrative Inst.
Koganei-shi,
Tokyo (JP)**
- **Ohtani, Naoki,
Independent Administrative Inst.
Koganei-shi,
Tokyo (JP)**

(74) Representative: **Faulkner, Thomas John et al
Cleveland
40-43 Chancery Lane
London WC2A 1JQ (GB)**

(56) References cited:
- **NAKAMURA M, ET AL.: "Experimental evaluation of spot dancing of laser beam in atmospheric propagation using high-speed camera" SPIE-THE INTERNATIONAL SOCIETY FOR OPTICAL ENGINEERING, vol. I4976, 28 January 2003 (2003-01-28), pages 149-158, XP002338369 USA**
- **CHIBA T., ET AL: "Spot dancing of laser beam in atmospheric propagation" ELECTRONIC AND COMMUNICATIONS IN JAPAN, vol. 54-B, no. 2, 1971, pages 89-96, XP008050377 US**
- **LIVINGSTON P.M., ET AL.: "Behavior of focused beams in atmospheric turbulence: Measurements and comments on the theory." JOURNAL OF THE OPTICAL SOCIETY OF AMERICA, vol. 63, no. 7, 1 July 1973 (1973-07-01), pages 846-858, XP008050375 US**

**Description**

The present invention relates to a method of evaluating free-space optical propagation characteristics for improving the quality of optical communications in free space.

Description of the Prior Art:

Free-space optical communication between adjacent buildings uses a transmitter that transmits an optical signal in the form of a modulated laser beam, and a receiver that receives the optical signal. Between the transmitter and the receiver are transparent gases, such as the atmospheric air and water vapor in the air, transparent materials, such as glass, and mirrors and the like that reflect the optical signal.

The advantage of this method is that it enables a high-speed communications route to be established using simple system equipment. However, this method has a number of drawbacks when it comes to long-range, line-of-sight communication between points in free space. For example, the transmitter is usually attached to a building, so when the building sways, the transmitter also sways, causing the laser beam spot to fluctuate. When the building is tall and the propagation distance is long-range, the fluctuation of the beam spot becomes quite pronounced. The movement of an object can be divided into parallel and rotational motion components. When a transmitter fluctuates, the parallel component has no distance dependency, but the rotational component increases with the increase in the distance of the beam propagation, which can cause the beam to miss the receiver. Although the emission angle of the laser beam can be increased to prevent this happening, doing so creates wave-front turbulence that restricts transmission speeds.

Also, in the case of a long-range optical communication route, temporal and spatial changes in the density of the air and the water vapor and the like can affect the propagating signal in many ways. Temperature changes and wind can change the density of the air along the signal propagation path, and the density of water vapor is changed by changes in the environment through which the path passes. Such optical propagation path fluctuations are known to be random.

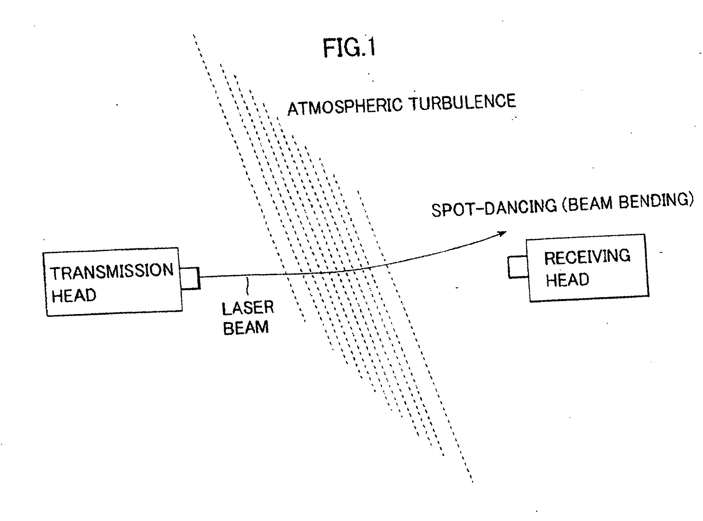

Figure 1 shows how the traveling direction of a laser beam launched from a transmitter to a receiver is altered by changes in the refraction index distribution of the atmosphere caused by air currents and the like. This bending of the laser beam and movement of the beam spot at the point of reception is called spot-dancing. In the case of a propagation distance of several kilometers, the fluctuation of the beam at the receiving point can be as much as several meters, so when the beam has a very small diameter, it can miss the receiver aperture, interrupting the optical link.

Although the emission angle of the laser beam can be increased to counter this, doing so reduces the optical reception efficiency and therefore makes it impossible to increase the transmission speed. Another technique used to reduce spot-dancing is to provide the transmitter and receiver with a beam-tracking function. A beam-tracking system functions by, at the receiving end, detecting deviation of the laser beam from the optimum receiving position, based on which, at the transmission end, the beam direction is adjusted accordingly. Spot-dancing characteristics (magnitude, direction, frequency spectrum) are important in optimizing the design of the tracking system.

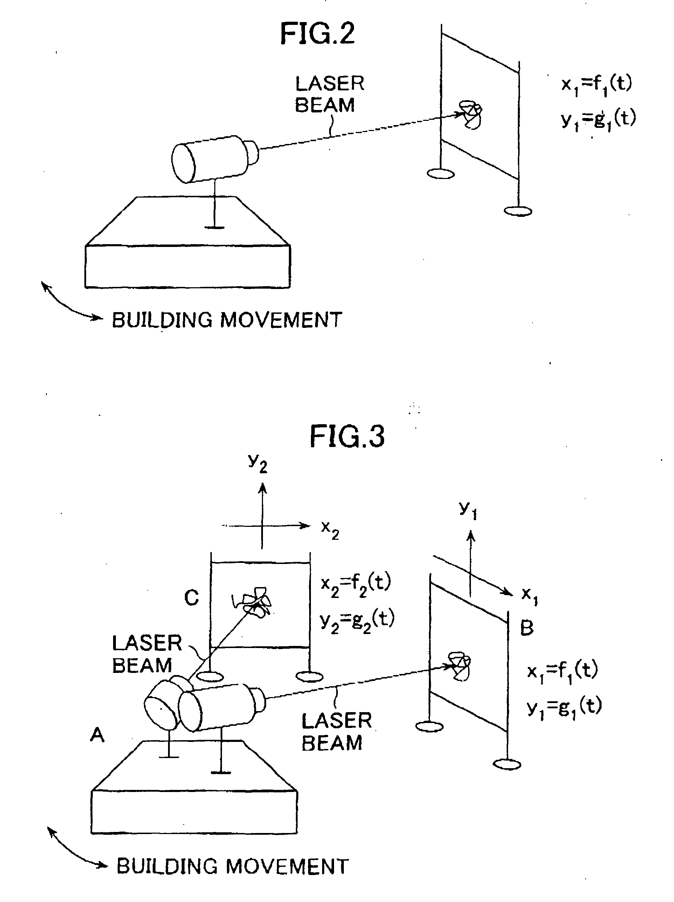

Figure 2 shows a method of observing spot-dancing by projecting an atmospherically propagated optical beam on a screen and using a camera to observe the spot. In this case, the beam-spot position on the screen fluctuates due to both atmospheric turbulence and building/transmitter vibration. As such, this method cannot be used to isolate the extent of the effect of atmospheric turbulence.

If the effects of atmospheric turbulence and building/transmitter vibration could be differentiated, it would be useful in many ways. For example, if the effect of building/transmitter vibration was large, the transmitter location or setup could be changed. If the effect of atmospheric turbulence was large, the design of the tracking system could be optimized to make it more generally applicable.

Thus, as described in the above, the drawback of free-space optical communications is that it is subject to the effect of building variations and changes in the environment of the propagation path.

CHIBA T., ET AL: "Spot dancing of laser beam in atmospheric propagation" ELECTRONIC AND COMMUNICATIONS IN JAPAN, vol. 54-B, no. 2, 1971, pages 89-96, XP008050377 describes theory and experiments for studying Spot Dancing of Laser Beams caused by Atmospheric Propagation. The theory and experiments relate to single laser beam propagation and predicting and measuring the effect of atmospheric conditions on such a beam.

In view of the above, an object of the present invention is to provide a method of evaluating free-space optical propagation characteristics that distinguishes between optical propagation path changes due to transmitter vibration and those due to environmental changes.

According to the present invention there is provided a method of evaluating spot-dancing of laser beams in free-space optical propagation, characterised by the steps of emitting a plurality of laser beams from a respective plurality of laser sources having substantially the same vibration component; receiving respective laser beams at a first target point and a second target point and reading time-based spatial fluctuations between the laser beams received at the first and second target points; using a first distance from a first laser source to the first target point and a second distance from a second laser source to the second target point to normalize the time-based spatial fluctuations; deriving a difference between a normalized spatial position of a laser beam at the first target point and a normalized spatial position of a laser beam at the second target point; and obtaining a frequency spectrum of time-based fluctuations of the derived spatial positions.

At least two of the plurality of emitted laser beams maybe beams traveling in opposite directions or emitted in parallel.

At least two of the plurality of emitted laser beams may be beams emitted from two laser sources affixed to the same pedestal.

The method may further comprise the steps of using optical scatterers to scatter each of the laser beams at the first and second target points, using an image-forming system to form an image of the scattered laser beams, and receiving light of the image formed.

At least one of the plurality of emitted laser beams may be a pulsed laser beam, and the pulsed laser beam maybe received by a receiver that operates in synchronization with pulses of the laser beam.

As described above, by using a plurality of laser sources having substantially the same vibration component and using the data from a plurality of receivers, present evaluation method makes it possible to simultaneously distinguish optical propagation path changes due to transmitter vibration from those due to environmental factors.

Further features of the invention, its nature and various advantages will be more apparent from the description made with reference to the accompanying drawings, in which:

Figure 1 is a drawing that illustrates problems in optical free-space communications,
Figure 2 is a drawing showing a configuration for observing spot-dancing,
Figure 3 is a drawing that illustrates the principle of a method of evaluating free-space optical propagation characteristics embodying the present invention,
Figure 4 is a drawing showing a specific example of the method of the invention,
Figure 5 is a drawing of a Cartesian coordinate system that expresses the motion of a building,
Figure 6 is a drawing illustrating a first embodiment of the method of the invention,
Figure 7 is a drawing illustrating a second embodiment of the method of the invention,
Figure 8 is a drawing illustrating a third embodiment of the method of the invention,
Figure 9 is a drawing illustrating a fourth embodiment of the method of the invention,
Figure 10 is a drawing illustrating a fifth embodiment of the method of the invention,
Figure 11 is a waveform of spot-dancing in the horizontal direction vs. time when laser beams were launched over a 100-meter indoor path (frame rate of 1000 frames/s), showing the beam centroid fluctuations of two beam spots affected by vibration from an electric motor,
Figure 12 is a waveform of spot-dancing in the horizontal direction vs. time when the laser beams were launched over a 100-meter indoor path (frame rate of 1000 frames/s), showing the difference between beam centroid fluctuations,
Figure 13 is a waveform of the frequency spectra of spot-dancing in the horizontal direction when the laser beams were launched over a 100-meter indoor path (frame rate of 1000 frames/s), showing the spectrum of the spot-dancing affected by vibration from an electric motor,
Figure 14 is a waveform of the frequency spectra of spot-dancing in the horizontal direction when the laser beams were launched over a 100-meter indoor path (frame rate of 1000 frames/s), showing the spectrum of difference beLween centroid fluctuations,
Figure 15 is a waveform of the frequency spectra of spot-dancing in the horizontal direction (frame rate of 10,000 frames/s), when the laser beams were launched over a 100-meter indoor path, and
Figure 16 is a waveform of the frequency spectra of spot-dancing in the horizontal direction (frame rate of 10,000 frames/s), when the laser beams were launched over a 750-meter outdoor path.

Details of the method of evaluating free-space optical propagation characteristics embodying this invention will now be described with reference to the drawings, in which parts and functions that are the same are denoted using the same reference symbols.

First, with reference to the measurement of spot-dancing frequency spectra, the principle of the elimination of frequency components due to transmitter (building) vibration will be described. Figure 3 shows a method for measuring atmospheric spot-dancing characteristics, using two laser beams in a system that includes points A, B and C. One laser beam is propagated from A to B and the other laser beam from A to C. It is assumed that the two laser sources at point A are fixed on a pedestal having a sufficiently high stiffness, with the pedestal being attached to a building.

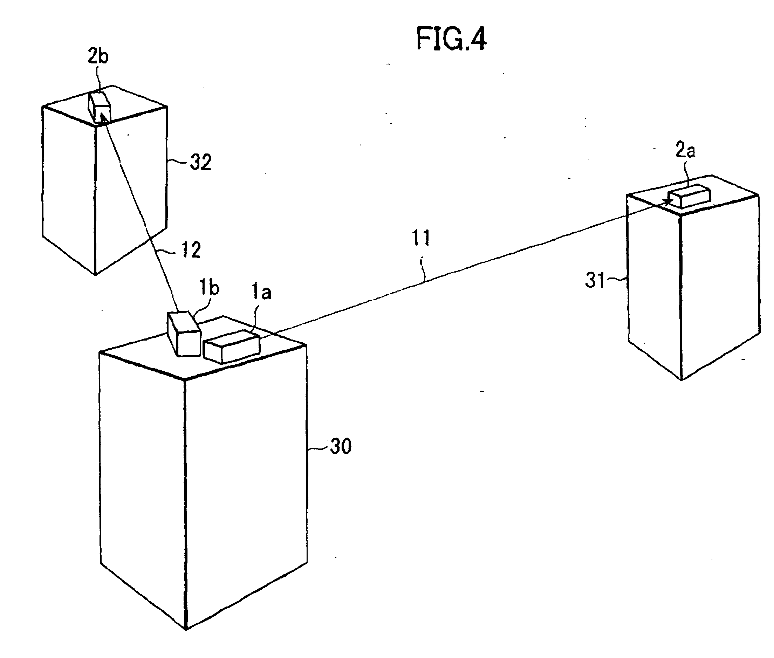

Figure 4 shows the arrangement more specifically. In Figure 4, a laser beam is emitted from a laser source 1a atop of a building 30 and propagates along a path 11 to fall incident onto a receiver 2a, atop of a building 31, having a two-dimensional optical detector. Having received the laser beam, the receiver 2a sends information on the position of the beam to a data processor (not shown). Similarly, a laser beam emitted from a laser source 1b propagates along a path 12 to fall incident onto a receiver 2b, atop of a building 32, having a two-dimensional optical detector, causing information on the position of the beam thus received to be sent to the data processor It is desirable for the laser sources 1a and 1b to be near-infrared sources, since most free-space communication systems use near-infrared light. A special apparatus is required to make near-infrared light visible, so for visibility, red light can also be added.

In this case, the vibration of the building at point A can be assumed to have the same affect on the beam propagating from A to C and on the beam propagating from A to B. That is, assuming the arrangement is viewed from above, if the building on which point A is located twists to the right, the beam spots at points B and C will also move to the right, and the amount of such movement will be proportional to the distance between A and B and the distance between A and C. The horizontal and vertical components of the movement of the beam spots projected on screens perpendicular to the beams at B and C are expressed as $(x_1, y_1)$ and $(x_2, y_2)$, respectively. Because $(x_1, y_1)$ and $(x_2, y_2)$ have strongly correlated components of the transmitter vibration, the correlated components can be cancelled out by taking the difference between the beam-spot movements multiplied by coefficients determined by the distances of beam propagation and the positions of the buildings. This is described in more detail below.

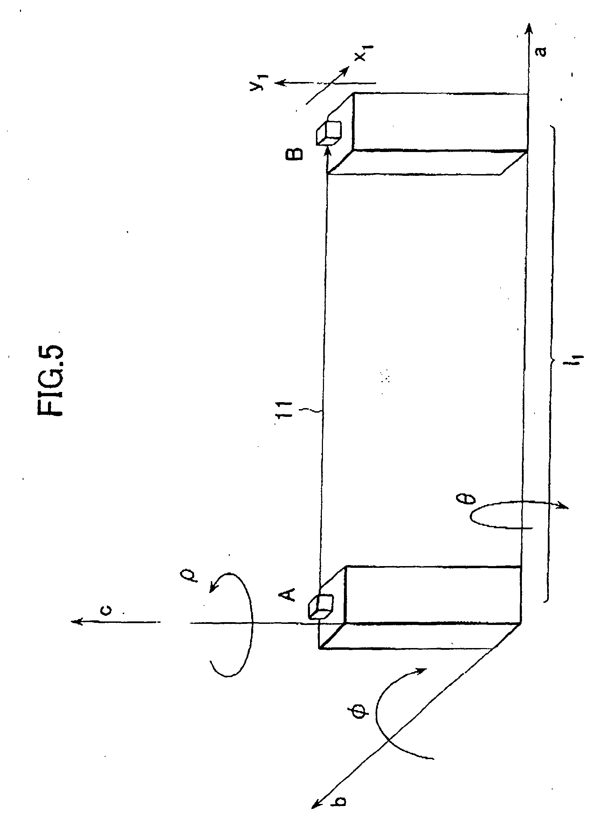

To describe the relationship between building vibration and beam-spot movement, the abc Cartesian coordinate system shown in Figure 5 is used to express the building motions. The beam 11 launched from point A to point B is parallel to the a-axis. Also, $l_1$ expresses the distance the beam travels between A and B. Movement of the laser source due to building vibration has six degrees of freedom, which are: shifts parallel to a, b and c and twists $\theta$, $\varphi$ and $\rho$. Using time t and the source-movement coordinate points $(a, b, c, \theta, \varphi, \rho)$, beam-spot movement can be expressed using the functions $f_1$, $g_1$, $f_2$, $g_2$, as follows.

$$x_1 = f_1(a, b, c, \theta, \varphi, \rho, t)$$

$$y_1 = g_1(a, b, c, \theta, \varphi, \rho, t)$$

$$\cdots \quad (1)$$

$$x_2 = f_2(a, b, c, \theta, \varphi, \rho, t)$$

$$y_2 = g_2(a, b, c, \theta, \varphi, \rho, t)$$

$$\cdots \quad (2)$$

Here, by using $f_1$ as a variable a, b, c, $\theta$, $\varphi$, $\rho$ about point $(a, b, c, \theta, \varphi, \rho, t) = (0, 0, 0, 0, 0, 0, t)$, using a Taylor development provides the following.

$$
\begin{aligned}
f_1(a, b, c, \theta, \varphi, \rho, t) \\
= f_1(0, 0, 0, 0, 0, 0, t) + Df_1(0, 0, 0, 0, 0, 0, t) \\
+ (1/2!)D^2f_1(0, 0, 0, 0, 0, 0, t) \\
+ (1/3!)D^3f_1(0, 0, 0, 0, 0, 0, t) + \cdots
\end{aligned}
$$

$$\cdots \quad (3)$$

wherein D is an operator defined by Equation 4.

$$D = a\frac{\partial}{\partial a} + b\frac{\partial}{\partial b} + c\frac{\partial}{\partial c} + \theta\frac{\partial}{\partial \theta} + \phi\frac{\partial}{\partial \phi} + \rho\frac{\partial}{\partial \rho}$$

$$\ldots \quad (4)$$

In Equation 3, over-primary terms express the building vibration component of the beam-spot movement. Here the effect of the over-secondary terms is disregarded, since they are small compared to the primary terms. Unless there are special atmospheric conditions, such as mirages, this type of approximation can be considered valid. At this time, Equation 3 becomes as shown in Equation 5.

$$f_1(a, b, c, \theta, \varphi, \rho, t) \approx f_1(0, 0, 0, 0, 0, 0, t) + Df_1(0, 0, 0, 0, 0, 0, t)$$

$$= f_1(0, 0, 0, 0, 0, 0, t)$$

$$+ a\frac{\partial f_1(0,0,0,0,0,0,t)}{\partial a}$$

$$+ b\frac{\partial f_1(0,0,0,0,0,0,t)}{\partial b}$$

$$+ c\frac{\partial f_1(0,0,0,0,0,0,t)}{\partial c}$$

$$+ \theta\frac{\partial f_1(0,0,0,0,0,0,t)}{\partial \theta}$$

$$+ \phi\frac{\partial f_1(0,0,0,0,0,0,t)}{\partial \phi}$$

$$+ \rho\frac{\partial f_1(0,0,0,0,0,0,t)}{\partial \rho}$$

$$\ldots \quad (5)$$

Equation 6 can be derived from the geometrical relationship of the points AB in the coordinate system.

$$\begin{cases} a\,\dfrac{\partial f_1(0,0,0,0,0,0,t)}{\partial a} = 0 \\[2mm] b\,\dfrac{\partial f_1(0,0,0,0,0,0,t)}{\partial b} = -b \\[2mm] c\,\dfrac{\partial f_1(0,0,0,0,0,0,t)}{\partial c} = 0 \\[2mm] \theta\,\dfrac{\partial f_1(0,0,0,0,0,0,t)}{\partial \theta} = 0 \\[2mm] \phi\,\dfrac{\partial f_1(0,0,0,0,0,0,t)}{\partial \phi} = 0 \\[2mm] \rho\,\dfrac{\partial f_1(0,0,0,0,0,0,t)}{\partial \rho} = -l_1\rho \end{cases}$$

$$\cdots (6)$$

The $f_1$ approximation of Equation 7 can be derived through substitution of Equation 6 for Equation 5.

$$x_1 = f_1(a,\ b,\ c,\ \theta,\ \phi,\ \rho,\ t)$$
$$\approx f_1(0,\ 0,\ 0,\ 0,\ 0,\ 0,\ t) - b - l_1\rho$$

$$\cdots (7)$$

Equation 8 is obtained by performing the same type of approximation in respect of $g_1$.

$$y_1 = g_1(a,\ b,\ c,\ \theta,\ \phi,\ \rho,\ t)$$
$$\approx g_1(0,\ 0,\ 0,\ 0,\ 0,\ 0,\ t) + c - l_1\phi$$

$$\cdots (8)$$

How to handle the beam-spot function (Equation 2) at point C in Figure 3 changes depending on the relationship among A, B and C. Below, the approximation of Equation 2 when the cases are divided into the following three is described, together with the method of eliminating the building vibration component.

(1) When beams are launched in opposite directions;
(2) When beams are launched in the same direction; and
(3) When beams are not parallel.

(1) Beams launched in opposite directions

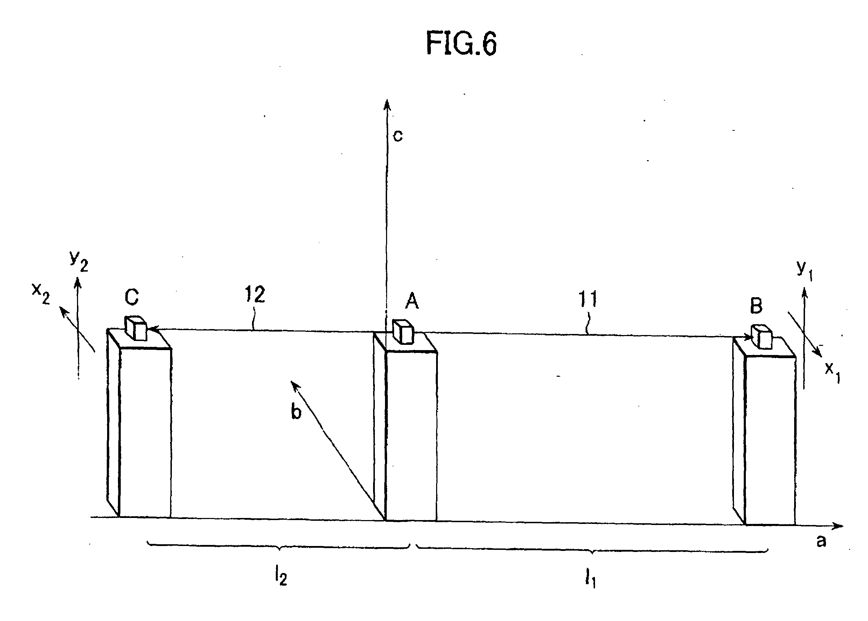

If, as shown in Figure 6, the beam 12 launched from point A toward point C and the beam 11 launched from point A toward point B are launched in opposite directions and are parallel to the same line, Equation 2 can be used for the approximations of Equations 9 and 10.

$$x_2 \approx f_2(0,\ 0,\ 0,\ 0,\ 0,\ 0,\ t) + b - l_2\rho \qquad \ldots (9)$$

$$y_2 \approx g_2(0,\ 0,\ 0,\ 0,\ 0,\ 0,\ t) + c + l_1\varphi \qquad \ldots (10)$$

In Equations 7 to 10, the building vibration component terms including $l_1$ and $l_2$ dominate because even a minute twist of the building is amplified at the point of arrival, causing major movement of the beam-spot. The horizontal building shift components b and c are usually small movements in the order of a few millimeters, and as such pose no problem in practice. Therefore, vibration components caused by building twist can be cancelled by obtaining x and y of Equations 11 and 12.

$$\begin{aligned} x &= x_1 - l_1/l_2 x_2 \\ &\approx f_1(0,\ 0,\ 0,\ 0,\ 0,\ 0,\ t) - l_1/l_2 f_2(0,\ 0,\ 0,\ 0,\ 0,\ 0,\ t) - (1 - l_1/l_2)b \end{aligned} \qquad \ldots (11)$$

$$\begin{aligned} y &= y_1 - l_1/l_2 y_2 \\ &\approx g_1(0,\ 0,\ 0,\ 0,\ 0,\ 0,\ t) + l_1/l_2 g_2(0,\ 0,\ 0,\ 0,\ 0,\ 0,\ t) + (1 + l_1/l_2)c \end{aligned} \qquad \ldots (12)$$

To obtain the frequency spectra of the spot-dancing in the atmospheric region in which A, B, and C are located, since it can be assumed that there is no characteristic difference in the frequency spectra of turbulence between A and B and between A and C, it can be considered that there is no characteristic difference in the frequency spectra between $f_1$ and $f_2$ and between $g_1$ and $g_2$. Therefore, the spectral characteristics will not be lost even when performing the linear calculations of Equations 11 and 12. This means that it is possible to find the spot-dancing frequency spectra from which the dominant building vibration components have been cancelled by performing Fourier transformation (fast Fourier transformation (FFT), for example) on x and y of Equations 11 and 12.

(2) Beams launched in the same direction

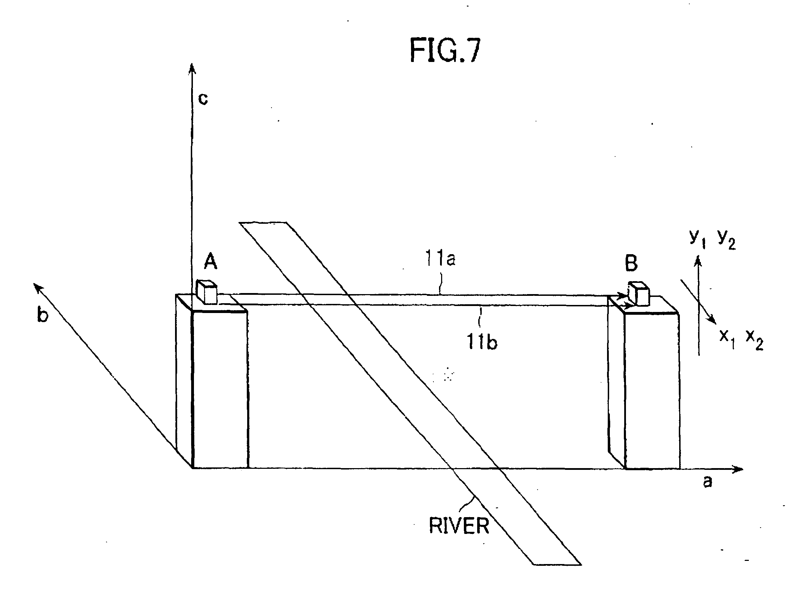

In the case of the preceding (1), it was assumed that the characteristic difference in atmospheric turbulence between the two beam routes AB and AC was negligible. If, for example, the beam AB passes over a river and the beam AC does not, there would likely be some characteristic difference in the atmospheric turbulence between the routes. Changes in the spectral distribution can be calculated as in Equations 11 and 12. The same kind of measurement described above can be performed in this case by launching two parallel beams from A to B apart from each other, denoted in Figure 7 as beams 11a and 11b. Since $x_1$ and $x_2$, and $y_1$ and $y_2$, have the same building vibration component, they can be subtracted to obtain Equation 13.

$$x = x_1 - x_2$$
$$\approx f_1(0, 0, 0, 0, 0, 0, t) - f_2(0, 0, 0, 0, 0, 0, t)$$
$$\ldots (13)$$

$$y = y_1 - y_2$$
$$\approx g_1(0, 0, 0, 0, 0, 0, t) - g_2(0, 0, 0, 0, 0, 0, t)$$
$$\ldots (14)$$

In the case of this method, however, due attention has to be paid when setting the distance between the two beams. If the distance between the beams is one meter, for example, the two beam-spots are moved similarly by atmospheric turbulence that fluctuates with d volume size smaller than one meter (that is, the wavelength of the spatial frequency is one meter or less), so the components of that atmospheric turbulence can be cancelled by the operations of Equations 13 and 14. In this case, it is desirable to separate points B and C by at least several meters. The advantage of this method of measurement is that, because of the closeness of the beam-spots at point B, the two beam spots can be observed using one camera, resulting in a simplified measurement system.

(3) Beams that are not parallel

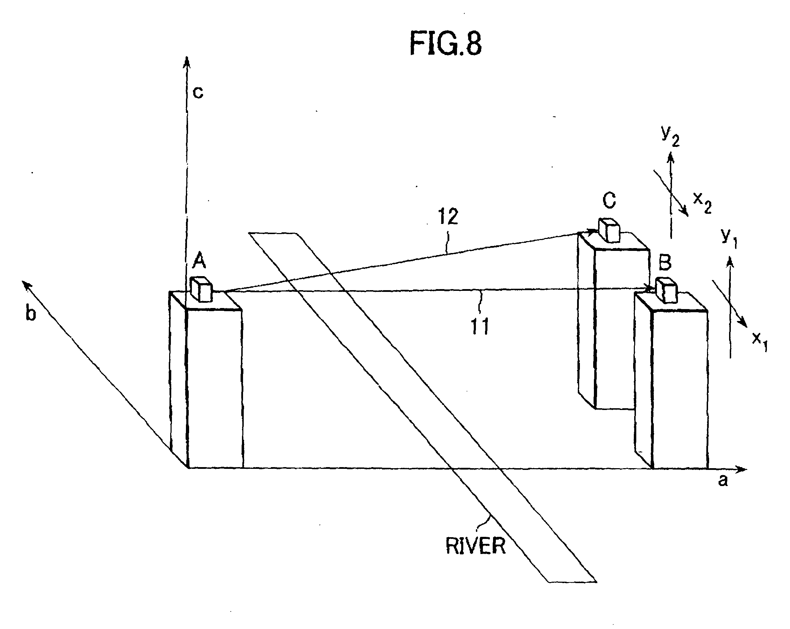

The drawback of the above method (2) is that the two beams have to be separated by an amount that is larger than the wavelength of the spatial frequency of the atmospheric turbulence. This drawback can be alleviated by launching the two beams 11 and 12 with an angle between them, as shown in Figure 8. The beam 12 from A to C i's affected by the building twist θ, so as the angle between the beams approaches a right angle, the error due to the twist component increases. Therefore, B and C should be located close enough together to make the angle between the beams negligibly small.

Arranging the beams from A to B and from A to C close together and substantially parallel makes it possible to confirm that the optical paths have the same free-space propagation characteristics. Similarly, the beams can have different propagation characteristics while still being situated close together, in which case in the event of any anomaly, analysis of the spatial propagation characteristics can be terminated, reducing wasted effort.

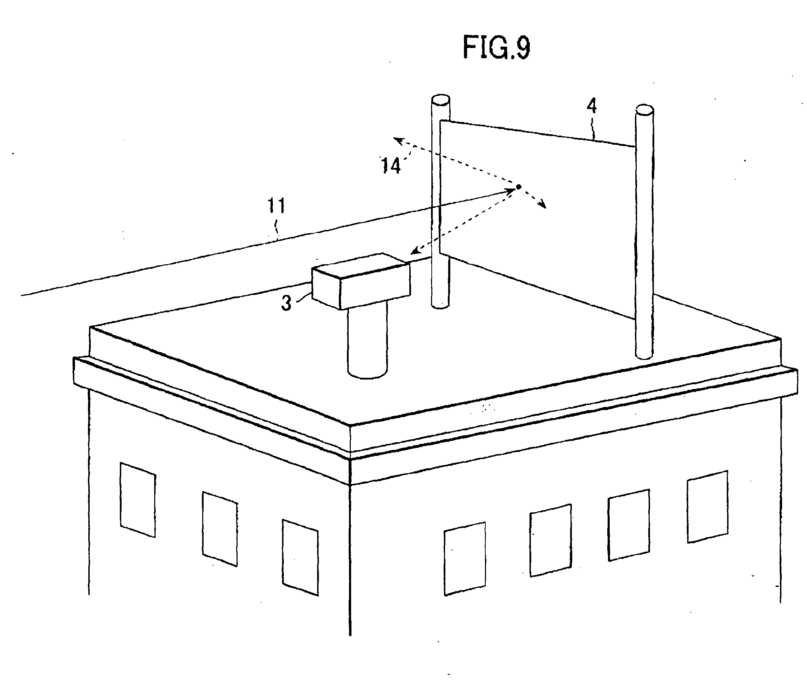

When the beam fluctuation at the receiver location is so great that the beam cannot be received at the receiver alone, the arrangement of Figure 9 can be used in which the beam 11 is projected onto an optical scatterer in the form of a screen 4. The scattered light 14 is then converted to an electric signal by the receiver 3, which has an image-forming system and a two-dimensional optical detector. This makes it easier to obtain beam-spot position information even when the beam is subjected to large fluctuations.

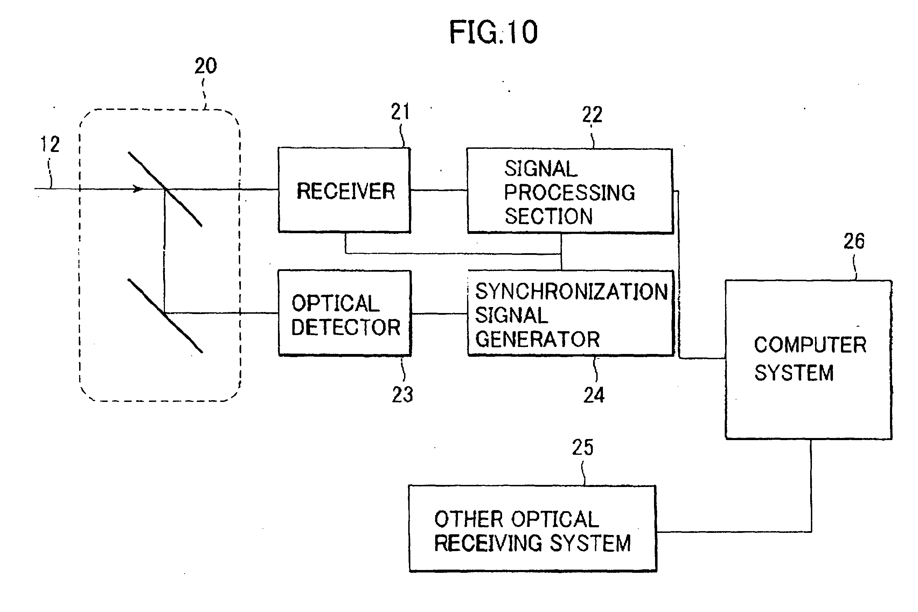

This method requires the use of a high-intensity laser source to launch the beam 11. When it is desired to hold down the average intensity, a laser source is used having a high repetition frequency. In this case, the configuration shown in Figure 10 is used to synchronize the optical receiving system with the laser pulses, thereby making it possible to obtain the necessary beam-spot position information even with a weaker beam.

Examples of actual measurements made using an embodiment of the invention will now be described. For these measurements, the method employed was that in which two parallel laser beams are launched in the same direction. A multi-axis stage was mounted on a tripod, and two HeNe lasers (having a wavelength of 632.8 nm) were fixed on the stage, 15 cm apart. One of the lasers had an output power of 17 mW and the other had an output power of 11 mW. The beam launched by each was expanded to a diameter of about 1 cm by using a zoom beam expander. The high-speed camera used to observe the beam-spots on the screen was a MEMRECAM fx K3 manufactured by NAC Image Technology, Inc. capable of high speeds of up to 10,000 frames/s. The beam-spot image data were analyzed using image-processing software to calculate the centroid of each beam-spot. Background noise with an intensity of up to 10% of the peak value of the beam profile value was cut. The centroid of each beam-spot was then calculated, and the coordinates of the beam-spots output as text data. In this experiment, although the two beam-spots were observed using one camera, the image was divided into a plurality of smaller images, each including one beam-spot and its surrounding domain. Beam-spot centroids were calculated individually.

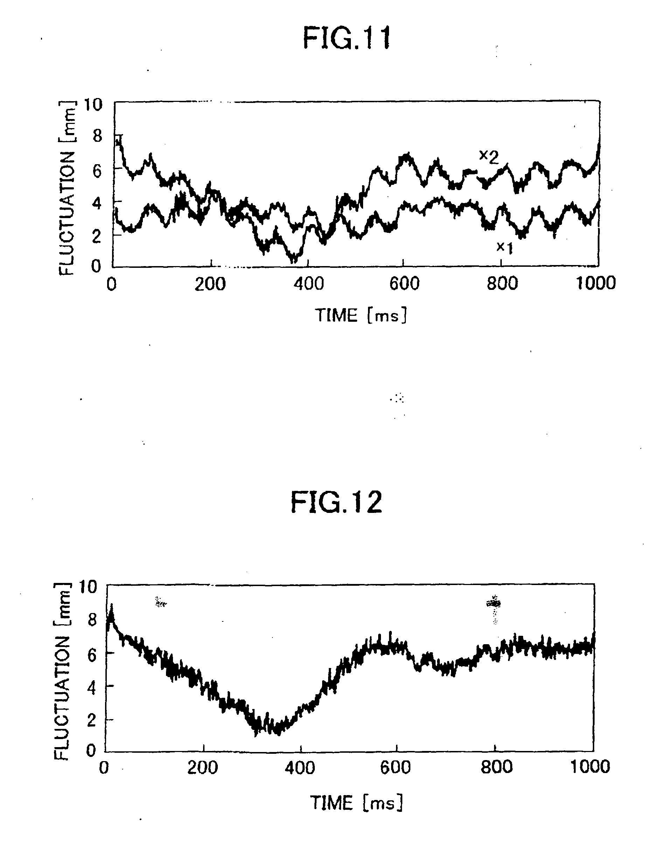

To evaluate the characteristics of the measurement system, the laser sources were forcibly vibrated using a motor to which a weight was attached and which was affixed to the tripod. The beams were launched over a 100-meter indoor path in a corridor of a building. The outside air temperature was 8.9°C. Although the measurements were conducted indoors, air-conditioners were switched on to generate airflow. Figure 11 shows time-based beam-spot horizontal move-

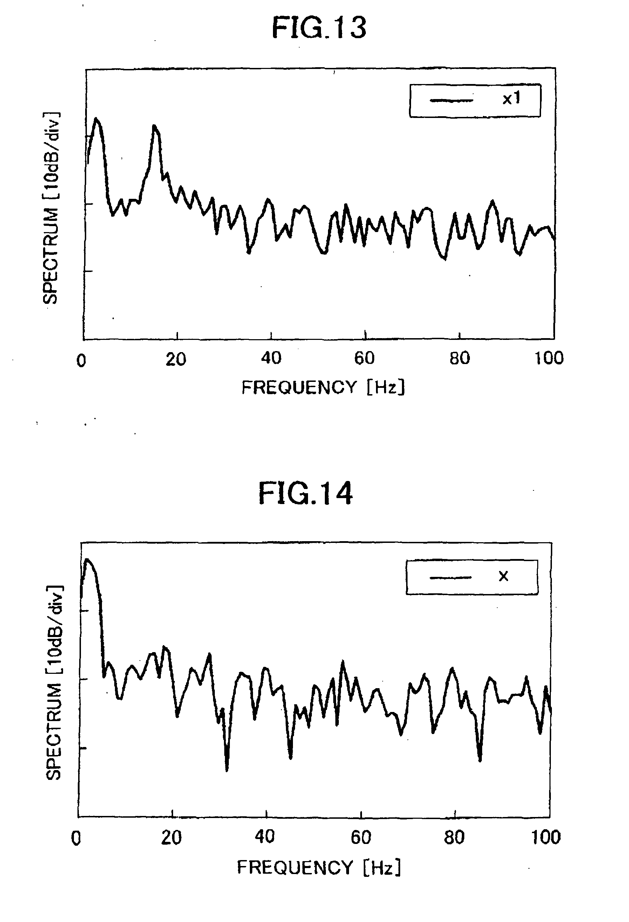

ment components ($x_1$, $x_2$). The waveforms show superposition of the spot-dancing caused by the aerial turbulence and the forced vibration of about 15 Hz generated by the motor. Figure 12 shows the time-based difference x between $x_1$ and $x_2$ in which the effect of the forced vibration by the motor has been suppressed. Figures 13 and 14 show frequency spectra of $x_1$ and x obtained by fast Fourier transformation (FFT). As shown by Figure 14, the motor-vibration spectrum of about 15 Hz was suppressed to below the noise level of the vibration component, showing that the proposed measurement method effectively suppresses the effect of the vibration.

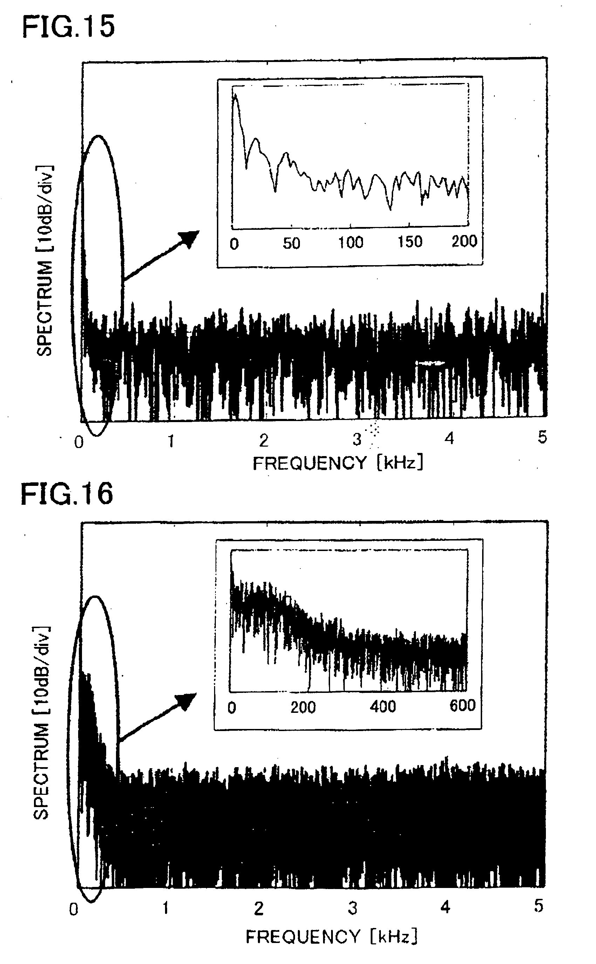

To approximately evaluate the frequency-spectrum range of the spot-dancing, indoor and outdoor measurements were conducted at the maximum frame rate of 10, 000 frames/s. Figure 15 shows the frequency spectrum up to 5 kHz obtained at the frame rate of 10,000 frames/s. As in the case of the experiment, this was conducted indoors. The principal component of the spectrum reached 50 Hz, and a characteristic spectral component was not observed at higher frequencies. Figure 16 shows the frequency spectrum for outdoor propagation measured over 750 meters, when the outside air temperature was 14.3°C. In this case, the difference was not calculated. The principal component of the spectrum reached 400 Hz. Based on the results shown in Figures 15 and 17, the frequency range of the spot-dancing is around or below 1 kHz, meaning that a frame rate of 2,000 frames/s is enough for the measurement.

In the receiving system shown in Figure 10, the beam 12 is divided using a splitter 20. An optical detector 23 uses one beam to restore the pulse signal, which generates a synchronization signal in a synchronization signal generator 24. The synchronization signal is used to operate the receiver 21 at intervals, or for synchronized detection by the signal processing section 22, to make it possible to obtain positional information even with a weak optical signal, thereby making it possible to use a laser source with a smaller average output intensity.

As described in the foregoing, the present method uses data obtained from a plurality of laser sources having substantially the same fluctuation component and a plurality of optical receivers to evaluate free-space optical propagation characteristics, and can simultaneously distinguish optical propagation path changes due to transmitter vibration from those due to environmental factors.

In addition, using at least two of a plurality of beams launched in the opposite directions from the plurality of laser sources enables laser-source vibration components to be separated.

Moreover, using at least two of the above laser beams to form a pair of laser beams launched in a parallel direction, readily enables conditions for an optical propagation path to be established.

The invention may also be carried out by launching at least two beams from laser sources fixed to the same pedestal, facilitating separation of laser-source vibration components.

The invention may also be carried out using an optical scatterer, such as a screen, to scatter the laser beams prior to beam reception, making it possible to evaluate free-space propagation characteristics even when there is major laser-beam movement.

The invention may also be carried out using a pulsed laser to launch a laser beam, so that beam-spot position information can be obtained using a low-intensity source, thereby making it possible to use smaller laser sources.

**Claims**

1. A method of evaluating spot-dancing of laser beams in free-space optical propagation, **characterised by** the steps of emitting a plurality of laser beams from a respective plurality of laser sources (A, 1a, 1b) having substantially the same vibration component; receiving respective laser beams at a first target point (B, 2a) and a second target point (C, 2b) and reading time-based spatial fluctuations between the laser beams received at the first and second target points; using a first distance ($l_1$) from a first laser source (1a) to the first target point (B, 2a) and a second distance ($l_2$) from a second laser source (1b) to the second target point (C, 2b) to normalize the time-based spatial fluctuations; deriving a difference between a normalized spatial position of a laser beam at the first target point (B, 2a) and a normalized spatial position of a laser beam at the second target point (C, 2b); and obtaining a frequency spectrum of time-based fluctuations of the derived spatial positions.

2. The method according to claim 1, wherein at least two of the plurality of emitted laser beams are beams traveling in opposite directions.

3. The method according to claim 1 or claim 2, wherein at least two of the plurality of emitted laser beams are beams emitted from two laser sources affixed to a same pedestal.

4. The method according to any one of claims 1 to 3, further comprising the steps of using an optical scatterer(4) to scatter each of the laser beams, using an image-forming system to form an image of the scattered laser beams, and receiving light of the image formed.

**5.** The method according to any one of claims 1 to 4, wherein at least one of the plurality of emitted laser beams is a pulsed laser beam.

**6.** A method according to claim 5, wherein the pulsed laser beam is received by a receiver that operates in synchronization with pulses of the laser beam.

## Patentansprüche

**1.** Ein Verfahren zum Bewerten von Leuchtflecktanzen bzw. Tanzen eines Lichtspots eines Laserstrahls bei optischer Freiraum Ausbreitung, **gekennzeichnet durch** die Schritte:

Emittieren einer Mehrzahl von Laserstrahlen von einer entsprechenden Mehrzahl von Laserquellen (A, 1a, 1b) mit im Wesentlichen derselben Vibrationskomponente,
Empfangen entsprechender Laserstrahlen an einem ersten Zielpunkt (B, 2a) und an einem zweiten Zielpunkt (C, 2b) sowie Lesen zeitbasierter räumlicher Fluktuationen zwischen den an dem ersten und dem zweiten Zielpunkt empfangenen Laserstrahlen, Verwenden eines ersten Abstands ($I_1$) von einer ersten Laserquelle (1a) zu dem ersten Zielpunkt (B, 2a) sowie eines zweiten Abstands ($I_2$) von einer zweiten Laserquelle (1b) zu dem zweiten Zielpunkt (C, 2b), um die zeitbasierten räumlichen Fluktuationen zu normalisieren,
Herleiten einer Differenz zwischen einer normalisierten räumlichen Position eines Laserstrahls an dem ersten Zielpunkt (B, 2a) und einer normalisierten räumlichen Position eines Laserstrahls an dem zweiten Zielpunkt (C, 2b) und Erhalten eines Frequenzspektrums von zeitbasierten Fluktuationen der hergeleiteten räumlichen Positionen.

**2.** Das Verfahren gemäß Anspruch 1, während mindestens zwei aus der Mehrzahl von emittierten Laserstrahlen Strahlen sind, die in entgegengesetzte Richtungen laufen.

**3.** Das Verfahren gemäß Anspruch 1 oder Anspruch 2, während mindestens zwei aus der Mehrzahl von emittierten Laserstrahlen Strahlen sind, die von zwei Laserquellen emittiert werden, die an dem gleichen Sockel befestigt sind.

**4.** Das Verfahren gemäß einem der Ansprüche 1 bis 3, weiterhin umfassend die Schritte:

Verwenden eines optischen Streuers (4), um jeden der Laserstrahlen zu streuen,
Verwenden eines bilderzeugenden Systems, um ein Bild der gestreuten Laserstrahlen zu erzeugen und Empfangen von Licht des erzeugten Bilds.

**5.** Das Verfahren gemäß einem der Ansprüche 1 bis 4, während mindestens einer aus der Mehrzahl der emittierten Laserstrahlen ein gepulster Laserstrahl ist.

**6.** Ein Verfahren gemäß Anspruch 5, während der gepulste Laserstrahl empfangen wird mittels eines Empfängers, der in Synchronisation mit dem Puls des Laserstrahls betrieben wird.

## Revendications

**1.** Procédé d'évaluation du papillotement de faisceaux laser dans une propagation optique en espace libre, **caractérisé par** les étapes consistant à émettre une pluralité de faisceaux laser d'une pluralité respective de sources laser (A, 1a, 1b) ayant sensiblement la même composante de vibration; recevoir des faisceaux laser respectifs à un premier point cible (B, 2a) et un deuxième point cible (C, 2b) et lire les fluctuations spatiales basées sur le temps entre les faisceaux laser reçus aux premier et deuxième points cibles; utiliser une première distance ($I_1$) d'une première source laser (1a) au premier point cible (B, 2a) et une deuxième distance ($I_2$) d'une deuxième source laser (1b) au deuxième point cible (C, 2b) pour normaliser les fluctuations spatiales basées sur le temps; obtenir une différence entre une position spatiale normalisée d'un faisceau laser au premier point cible (B, 2a) et une position spatiale normalisée d'un faisceau laser au deuxième point cible (C, 2b); et obtenir un spectre de fréquence des fluctuations basées sur le temps des positions spatiales dérivées.

**2.** Procédé selon la revendication 1, dans lequel au moins deux de la pluralité de faisceaux laser émis sont des faisceaux se déplaçant dans des directions opposées.

**3.** Procédé selon la revendication 1 ou la revendication 2, dans lequel au moins deux de la pluralité de faisceaux laser émis sont des faisceaux émis par deux sources laser fixées à un même socle.

**4.** Procédé selon l'une quelconque des revendications 1 à 3, comprenant en outre les étapes consistant à utiliser un diffuseur optique (4) pour diffuser chacun des faisceaux laser, en utilisant un système de formation d'image pour former une image des faisceaux laser diffusés, et pour recevoir la lumière de l'image formée.

**5.** Procédé selon l'une quelconque des revendications 1 à 4, dans lequel au moins une de la pluralité de faisceaux laser émis est un faisceau laser pulsé.

**6.** Procédé selon la revendication 5, dans lequel le faisceau laser pulsé est reçu par un récepteur qui fonctionne d'une manière synchronisée avec les pulsations du faisceau laser.

FIG.1

ATMOSPHERIC TURBULENCE

SPOT-DANCING (BEAM BENDING)

RECEIVING HEAD

LASER BEAM

TRANSMISSION HEAD

## FIG.2

LASER
BEAM

$x_1 = f_1(t)$
$y_1 = g_1(t)$

BUILDING MOVEMENT

## FIG.3

$y_2$

$x_2$

C

$x_2 = f_2(t)$
$y_2 = g_2(t)$

LASER
BEAM

$y_1$

$x_1$

B

$x_1 = f_1(t)$
$y_1 = g_1(t)$

LASER
BEAM

A

BUILDING MOVEMENT

FIG.4

EP 1 363 415 B1

FIG.5

15

# FIG.6

# FIG.7

FIG.8

# FIG.9

EP 1 363 415 B1

# FIG.10

EP 1 363 415 B1

# FIG.11

# FIG.12

## FIG.13

## FIG.14

FIG.15

FIG.16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHIBA T. et al.** Spot dancing of laser beam in atmospheric propagation. *ELECTRONIC AND COMMUNICATIONS IN JAPAN,* 1971, vol. 54 (2), 89-96